# EUROPEAN PATENT SPECIFICATION

(11) **EP 2 155 571 B1**
(45) Date of publication and mention of the grant of the patent: **01.02.2012**
(21) Application number: 07719972.7
(22) Date of filing: 13.06.2007
(51) Int. Cl.: B65D 21/032, B32B 27/10, B32B 29/08, B65D 21/036, B65D 5/56, B65D 5/64, B65D 81/18, B65D 81/24, B65D 85/34, B65D 85/52

(54) **GROOVED LID FOR PACKAGING OF FRESH FRUITS, VEGETABLES AND FLOWERS IN CORRESPONDING MODIFIED ATMOSPHERE TRAYS**
MIT NUTEN VERSEHENER DECKEL ZUR VERPACKUNG VON FRISCHEM OBST, FRISCHEM GEMÜSE UND FRISCHEN BLUMEN IN ENTSPRECHENDEN SCHALEN MIT MODIFIZIERTER ATMOSPHÄRE
COUVERCLE RAINURÉ PERMETTANT DE CONDITIONNER DES FRUITS FRAIS, DES LÉGUMES ET DES FLEURS EN PLATEAUX CORRESPONDANTS SOUS ATMOSPHÈRE MODIFIÉE

(43) Date of publication of application: 24.02.2010
(73) Proprietor: Freshxtend Technologies Corp., Vancouver, BC V6B 5A1 (CA)
(72) Inventor: LIDSTER, Perry, D., Yarrow, British Columbia V2R 5C9 (CA); GOUGH, William, A., Surrey, British Columbia V4P 2A5 (CA); LEUNG, Cheong, Kit, Vancouver, British Columbia V5X 2C8 (CA); CACACE, Juan, Eduardo, Penticton, British Columbia V2A 8L3 (CA)
(74) Representative: Acco, Stefania
(86) International application number: PCT/CA2007/001056
(87) International publication number: WO 2008/151404

(56) References cited:
- EP-A1- 0 005 970
- CA-A1- 2 107 456
- CA-A1- 2 209 999
- CA-A1- 2 519 533
- US-B2- 7 222 745

## Description

### TECHNICAL FIELD

This invention relates to novel designs of tray lids and tray bases for modified atmosphere packaging of fresh fruit, vegetables and cut flowers. More particularly, this invention relates to novel designs of landscaped lids and corresponding tray bases which enable cooling air to be circulated in single or multiple directions through stacked lid and tray combinations that contain fresh fruits, vegetables and cut flowers in a modified atmosphere environment.

### BACKGROUND

The quality attributes of fresh fruits, vegetables and cut flowers should be maintained as much as possible for as long as possible to ensure consumer acceptability. Quality deterioration of horticultural produce such as fresh fruits, vegetables and flowers comes about through inherent plant tissue enzyme reactions including respiration, ripening and senescence. Deterioration also occurs through microbial growth and water loss from the tissue. A method of inhibiting the deteriorative enzyme reactions, and the growth of yeasts, molds and bacteria in fresh produce involves the reduction of the produce temperature to between 1° and 12°C, and the creation of low O₂/high CO₂ modified atmosphere (MA) around the produce. Another quality reducing factor is that water in fruits and vegetables can be lost readily under low relative humidity conditions thereby causing dehydration, skin wrinkling, wilting and reduction in crispness and firmness of the fruits, vegetables and flowers. The rate of water loss from such fresh produce can be restricted by storing the produce in closed package systems consisting of walls with low moisture permeability.

Corrugated paperboard boxes and cartons are used commercially for the storage and transport of fresh horticultural commodities. Advantages of corrugated paperboard boxes and cartons include relatively low cost per unit volume, low thermal energy conductivity, impact absorption which prevents bruising of commodities and ease of disposal at the receiving end of the shipping route. One type of globally used corrugated paperboard box is known as a Eurotray. It has a standard horizontal dimension of 40 cm width and 60 cm length which is compatible for storage in stacks on pallets in ISO conforming containers.

Conventional corrugated paperboard has a very high gas and moisture permeability and as such is unsuitable for modified atmosphere packaging of horticultural produce. The fresh produce industry incorporates the use of stackable corrugated fiberboard cartons or returnable plastic crates of various sizes and shapes to accommodate a wide array of fresh fruits and vegetables for transportation to market. In general, there are two broad categories of stackable fiberboard cartons used in the produce industry, namely open style cartons which incorporate apertures such as hand-holds and concavities for refrigerated air circulation and closed style cartons which do not include the apertures and concavities but incorporate selective gas permeable membranes to limit gas exchange between the interior headspace of the sealed cartons and ambient atmosphere.

Open style cartons are advantageous because they allow for direct field packing of the harvested produce in the cartons, followed by refrigeration and shipment to market. The simple packaging and cooling of the produce provides significant time, labor and cost savings. A main disadvantage of this type of packaging is that the free movement of oxygen around the harvested produce maintains produce respiration rates and thus reduces the amount of time the produce can be stored and/or transported without quality deterioration. To offset some of these deleterious effects, produce is conventionally harvested earlier in the growing season while the produce is still green. This is before optimal nutritional values and desirable tastes have developed in the produce, thus reducing the quality of the produce delivered to market. Another disadvantage of the open style packaging is the minimal protection afforded to ambient temperature fluctuations frequently encountered during transportation to market.

Closed style cartons, known also as modified atmosphere packaging (MAP), have an advantage because the produce can be harvested when ripe. Such packaging of fruits, vegetables and flowers involves:
1. Harvesting the produce at full ready-to-eat maturity;
2. Pre-packaging treatment of the produce, including sanitizing, grading and pre-cooling;
3. Packing of the produce in a controlled gas-permeable package system;
4. Introduction of a predetermined CO₂ and O₂ containing gas mixture into the headspace of the package system or the retention of existing air in the head-space of the package system;
5. Closure and sealing of the modified atmosphere (MA) package system; and
6. Re-cooling of the packaged produce to transport temperature.

During storage, the fruits, vegetables and flowers respire and convert O₂ from the headspace to CO₂ with the result that the O₂ content in the headspace decreases while the CO₂ content increases. The respiring fruits, vegetables or flowers generate heat which offsets refrigeration. An objective in the design of an effective package system for MAP of fresh produce is to regulate the influx of O₂ into the package and the efflux of CO₂ from the package headspace. In this way, it is possible to achieve and maintain a desirable low O₂, high CO₂ modified equilibrium atmosphere and controlled temperature in the headspace around the stored produce for optimum retention of the fresh quality attributes and for the reduction of microbial growth while the fruits, vegetables and flowers are being shipped from source to destination, and storage at the destination.

Low levels of O₂ and elevated levels of CO₂ in the headspace around a horticultural commodity reduce the respiration and ripening rates, and the growth of spoilage organisms (spoilogens) of the commodity. Unsuitable modified atmospheres around fresh produce in a package system can induce physiological damage, inhibit wound healing, enhance senescence and cause formation of off-flavor components in the produce. Oxygen levels of less than 1% vol. bring about anaerobic respiration and off-flavor development, whereas CO₂ levels of about 10% vol. or higher inhibit microbial growth. CO₂ levels greater than 20% vol. over an extended period may cause tissue damage to CO₂-sensitive fresh produce.

Package systems for MAP must be designed and constructed with specific packaging materials to meet the following requirements:
1. Maintain definitive beneficial equilibrium levels of CO₂ and O₂ in the headspace of the package system;
2. Obviate gas pressure build-up within the package system;
3. Minimize moisture loss from fresh produce contained in the MA package;
4. Prevent fresh produce crushing and bruising;
5. Inhibit water migration from the package interior into the walls of the package system to thereby retain structural strength of the walls; and
6. Transmit fresh product respiration heat away from the package system.

The gas and moisture permeabilities of the package components of MA package systems are critical parameters. The technology of plastic polymeric films has advanced to such an extent that a specific gas permeability requirement can be met with a single plastic film or a multi-layer film combination, with or without vent pinholes.

In 1960, Eaves (J. Hort. Sci. 37:110, 1960) reported the effectiveness of gas-permeable, flexible polymeric barrier film as a package system for extending the life of fresh commodities. Tomkins (J. Appl. Bacteriol. 25:290, 1962) used polymeric film-covered trays as package systems to determine their effectiveness in establishing equilibrium MA around apples. Prior art on the use of bags made from polymeric plastic, gas permeable film such as polyethylene and polyvinylchloride, for prolonging of shelf-life of stored fruits and vegetables, is exemplified by US Patent No. 3,450,542, Badran, US Patent No. 3,450,544, Badran et al., and US Patent No. 3,798,333, Cummin. A more complex package system has been described by Rumberger (US Patent No. 3,630,759) in that an inner plastic pouch containing the produce is enveloped by an outer pouch containing an atmosphere of less than 15% O₂. Both pouches are to be constructed from gas-permeable films.

US Patent No. 5,575,418, issued 19 November 1996, Wu et al., relates to novel package systems for refrigerated modified atmosphere packaging of fresh fruit, vegetables and cut flowers. More particularly, the patent discloses the design, construction, closure, sealing and use of gas-permeable corrugated paperboard package systems for prolonging the storage life of fresh fruits, vegetables and cut flowers under modified atmosphere in the headspaces of the closed package system. The corrugated gas permeable paperboard comprises: (a) a first layer of kraft paper; (b) a layer of polymer having a gas permeability which permits gas to be transmitted through the polymeric film at prescribed levels; (c) a second layer of kraft paper, said first and second layers of kraft paper sandwiching the polymer between them; (d) a corrugated fluting; and (e) a third layer of kraft paper affixed to the corrugated fluting.

US Patent No. 5,609,293, issued 11 March 1997, Wu et al., relates to the design, construction and use of lined or coated corrugated paperboard package systems (e.g. boxes, cartons) for prolonging the storage life of fresh fruits and vegetables under modified atmospheres (MA) in the headspaces of the closed package systems. The plastic-paperboard construction comprises a first layer of polymeric film, a second layer of kraft paper adjacent the first layer, a kraft paper corrugated flute adjacent the second layer and a fourth layer of kraft paper adjacent the flute.

US Patent No. 6,050,412, issued 18 April 2000, Clough, et al., relates to a novel method and apparatus for packaging and shipping horticultural products including cut flowers. In particular, the patent discloses a novel method of and packaging for packaging cut flowers in a modified atmosphere package to prolong shelf life in shipping the packaged flowers to the destination, and then at the destination, opening the package and rehydrating the cut flowers in the package by saturating the stems of the flowers with water.

Patent Cooperation Treaty Publication No. WO 2008/009092, published 24 January, 2008, discloses novel Eurotray compatible package systems for refrigerated modified atmosphere packaging of fresh fruit, vegetables and cut flowers. More particularly, the application relates to the design, construction, closure, sealing and use of gas-permeable paperboard package systems and shipping trays for prolonging the storage life of fresh fruits, vegetables and cut flowers under modified atmosphere in the headspaces of the closed package system. A gas permeable paperboard comprising: (a) a first layer of kraft paper; (b) a layer of polymer having a gas permeability which permits gas to be transmitted through the polymeric film at prescribed levels; (c) a second layer of kraft paper, said first and second layers of kraft paper sandwiching the polymer between them.

None of the foregoing cited references discloses a stackable lid and tray system which incorporates modified atmosphere technology, allows single or dual angular direction cooling and ventilation of stacked and/or palletized packages or facilitates visual inspection of the package contents without opening the sealed package.

There is a need for a closed stackable lid and tray package system which incorporates modified atmosphere technology, allows harvesting and packaging of produce in either the field or in a centralized facility, allows single or dual direction of cooling and ventilation of stacked and/or palletized packages to offset produce respiration, allows visual inspection of the packaged produce at any point following packaging and provides the ability to refrigerate the fresh produce during transit.

US 6,880,748,B2, Machado, discloses a modified atmosphere packaging system and method which allows field and/or centralized facility packing of fresh produce and refrigerated air to circulate throughout a palletized stack of cartons. The packaging includes a transparent lid with raised stacking supports at the four corners. The lid is sealingly attached to a corrugated fiberboard carton with a gas permeable membrane. The transparent lid allows for inspection of perishable produce contained therein without breaching an established modified atmosphere. A problem with this system is that when the cartons are stacked on one another, unless care is taken to ensure that the upper carton is squarely mounted on the lower carton, the lower corners of the upper carton can miss the corner supports and drop into the grooves in the lid on the lower carton. Another shortcoming is that the total surface area of the raised supports at the four corners of the carton is not large and load bearing capability is minimized.

CA 2 519 533 describes a bulk packaging system which incorporates at least one selective gas permeable membrane and includes a transparent lid of polymeric construction. The lid includes an interior surface, an exterior surface, four corners, and a plurality of raised stacking support structures disposed at about each of the four corners. The raised stacking support structures include a predefined height sufficient to provide an air gap between a bottom of another corrugated carton and the exterior surface of the lid when vertically stacked two or more high.

The foregoing examples of the related art and limitations related thereto are intended to be illustrative and not exclusive. Other limitations of the related art will become apparent to those of skill in the art upon a reading of the specification and a study of the drawings.

### SUMMARY OF THE INVENTION

The following embodiments and aspects thereof are described and illustrated in conjunction with systems, tools and methods which are meant to be exemplary and illustrative, not limiting in scope. In various embodiments, one or more of the above-described problems have been reduced or eliminated, while other embodiments are directed to other improvements.

The invention is directed to a gas-permeable modified atmosphere package combination comprising a lid constructed of a polymer, the lid in one embodiment having on the top surface thereof at the mid-regions of each side a plurality of raised load supports and in between grooves; and a base with a hollow interior constructed of corrugated kraft paper polymer and having a configuration at the top edges which conforms with the interior profile of the lid; the grooves enabling air to be circulated over the lid when one package combination is stacked on another.

The top surface of the lid can have around its periphery at least one raised load support in the mid-region of each end and at least one raised load support in the mid-region of each side, and a depressed area between the raised end and side load supports. The top surface of the lid can have around its periphery at least two raised load supports in the mid-region of each end and at least three raised side supports in the mid-region of each of the two sides of the lid, and a depressed area between the raised end and side load supports. The top surface of the lid can have around its periphery at least two raised load supports in the mid-region of each end and at least four raised side supports in the mid-region of each of the two sides of the lid, and a depressed area between the raised end and side load supports.

The corners of the top surface of the lid can have diagonal grooves therein. The grooves at the sides of the lid can be disposed laterally while the grooves at the ends of the lid can be disposed longitudinally. The grooves of the surface of the lid can have an "X" type pattern. The lid and the base can be 60 cm in length and 40 cm in width.

The base can comprise a first outer layer of kraft paper, a first intermediate layer of corrugated kraft paper, a second intermediate layer of polymer and a second outer layer of kraft paper. The polymer in the base can be selected from the group consisting of ethylene vinylacetate (EVA), ethylbutyl acetate (EBA), a crosslinked ionomer resin, cast polyester (PET), a polyamide and polycarbonate (PC). The polymer can be low density polyethylene or high density polyethylene, or a copolymer of low density polyethylene and ethylenebutylacetate.

The gas permeability of the polymer of the base can be between about 50 and 100,000 cc³/m² 24 hr. 1 atm.

The invention is also directed to a lid for a gas-permeable modified atmosphere package comprising a top surface which can be rectangular or square, said surface including a plurality of raised load supports and in between grooves arranged around its periphery, the grooves enabling air to be circulated over the lid when one package is stacked on another.

Each end of the lid can have in the mid-region thereof at least one raised load support and each side of the lid can have in the mid-region thereof at least one raised load support and a depressed area can exist between the raised end and side load supports. Each end of the lid can have in the mid-region thereof at least two raised load supports and each side of the lid can have in the mid-region thereof at least three raised side supports. Each end of the lid can have in the mid-region thereof at least three raised load supports and each side of the lid can have in the mid-region thereof at least four raised side supports.

The grooves at the sides of the lid can be disposed laterally while the grooves at the ends of the lid can be disposed longitudinally. The top surface of the lid can have diagonally disposed grooves at each of the four corners of the lid. The lid can be formed of transparent polymer.

The lid can have a planar top surface and can be formed of a transparent material. The top surface of the lid can be quadrilateral such as square or rectangular and the transparent material can be a transparent polymer. The lid can be deployed on a hollow base constructed of paperboard.

The lid can be formed of transparent polymer, can have a top surface with a square configuration and a plurality of raised load supports and in between grooves positioned around its periphery. The raised supports can be located at the mid-regions or the corners of the top sides of the lid.

In addition to the exemplary aspects and embodiments described above, further aspects and embodiments will become apparent by reference to the drawings and by study of the following detailed descriptions.

### BRIEF DESCRIPTION OF DRAWINGS

Exemplary embodiments are illustrated in referenced figures of the drawings. It is intended that the embodiments and figures disclosed herein are to be considered illustrative rather than restrictive.

Figure 1 illustrates an isometric view of a lid with a plurality of raised supports and in between grooves around the circumference of the lid for packaging fruit and vegetables, according to a first embodiment of the invention.

Figure 2 illustrates an isometric view of a corresponding tray base for the lid illustrated in Figure 1.

Figure 3 illustrates an isometric view of a lid with a plurality of raised supports around the circumference for packaging cut flowers, according to a second embodiment of the invention.

Figure 4 illustrates a corresponding tray base for the lid illustrated in Figure 3.

Figure 5 illustrates an isometric view of an "X"-grooved lid, according to a further embodiment of the invention.

Figure 6 illustrates an isometric view of a tray base for the lid illustrated in Figure 5.

Figure 7 illustrates a plan view of the lid illustrated in Figure 1.

Figure 8 illustrates a side elevation view of the lid of Figure 7.

Figure 9 illustrates an end view of the lid of Figure 7.

Figure 10 illustrates a section view of taken along lines 10-10 of Figure 7.

Figure 11 illustrates a plan view of a blank for a tray base, as illustrated in Figure 2.

Figure 12 illustrates a plan view of a standard ISO container with a grouping of pallets loaded with stacked lid and tray base containers according to the embodiment illustrated in Figures 1, 2 and 7 to 11 of the invention.

Figure 13 illustrates a plan view of the lid illustrated in Figure 3.

Figure 14 illustrates a side elevation view of the lid of Figure 13.

Figure 15 illustrates an end view of the lid of Figure 13.

Figure 16 illustrates a plan view of a blank for a tray base, as illustrated in Figure 4.

Figure 17 illustrates a plan view of a standard ISO container with a grouping of pallets loaded with stacked lid and tray base containers according to the embodiment illustrated in Figures 3, 4 and 13 to16 of the invention.

Figure 18 illustrates a plan view of an "X" grooved lid as illustrated in Figure 5.

Figure 19 illustrates a side elevation view of the lid illustrated in Figure 18.

Figure 20 illustrates an end view of the lid of Figure 18.

Figure 21 illustrates a section view of the lid taken along lines 21-21 of Figure 18.

Figure 22 illustrates a plan view of a blank for a tray base, as illustrated in Figure 6.

Figure 23 illustrates a plan view of a standard ISO container with a grouping of pallets loaded with stacked lid and tray base containers according to the embodiment illustrated in Figures 5, 6 and 18 to 22 of the invention.

Figure 24 illustrates an isometric view of a modified Eurobox with recessed sides and ends.

Figure 25 illustrates an isometric view of a MAP box with a transparent lid.

Figure 26 illustrates an isometric view of a modified Eurobox holding a plurality of MAP packages with transparent lids.

Figure 27 illustrates an isometric view of an alternative embodiment of a MAP box with a plurality of raised supports around the circumference of the lid.

Figure 28 illustrates an isometric view of a further alternative embodiment of a MAP box with raised supports at the corners.

Figure 29 illustrates an isometric view of a further alternative embodiment of a MAP box with raised supports mounted on a MAP box base.

### DESCRIPTION

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, rather than a restrictive, sense.

To deal with the long distance and the time required for continental and overseas shipment of MAP preserved fruits, vegetables and flowers, we have invented a unique family of lids having an uneven top surface comprising a series of raised load bearing areas around the circumference of the lid and grooves between the raised areas and a central depressed area. In one aspect, the invention includes a family of corresponding congruent tray base designs. Together the lid and tray base can be used for the shipment of fresh fruit such as grapes, peaches, nectarines and the like, vegetables such as sweet peppers, spinach, lettuce, tomatoes and the like, and fresh flowers in a modified atmosphere environment.

In one preferred version of the lid and tray base, the lid and tray base can measure 60 cm by 40 cm to conform with Eurotray standards. The modified Eurotray, according to the invention, has a top lid surface incorporating a plurality of raised supports around the circumference and a plurality of in between grooves. The grooves enable cooling air to circulate between Eurotrays when such trays are stacked on a pallet and stored in a refrigerator or shipped in an ISO conforming container. The cool air circulated through the stacked Eurotrays helps to offset heat generated by the respiring vegetables, fruit or flowers packaged in the Eurotrays. The top surfaces of the raised areas can be roughened or have a friction creating pattern thereon to enhance grip between trays when stacked.

A common request from customers of packaged fruits, vegetables and flowers is a capability of viewing the packaged product without opening the package. The lid of the subject invention is preferably formed of a transparent polymer.

Since the packaged product is refrigerated and since moisture is present in the interior of the package from respiration of the packaged fruit, vegetables or flowers, the interior of the lid typically collects condensation. The raised supports and grooved lid can, if desired, be molded from a polymer which contains an anti-fog agent. Alternatively, a moisture resistant agent can be applied to the interior surface of the lid.

A common problem with conventional modified atmosphere packaged fruit, vegetables or flowers is that they are packaged in corrugated paperboard containers which inherently provide insulation, which retains heat. If the fruit or vegetable product in the package is warm, time is required to cool the packaged fruit, vegetables or cut flowers to acceptable modified atmosphere refrigeration levels. A transparent lid is useful because it is reasonably heat conductive and transmits respiration heat from the packaged produce to the atmosphere, whereas conventional corrugated linerboard packaging inhibits heat transmission. The grooved surface of the lid enables cooling air to be circulated through stacked trays and thereby cool the produce quickly to refrigeration temperatures, and subsequently to maintain the produce in a cool condition.

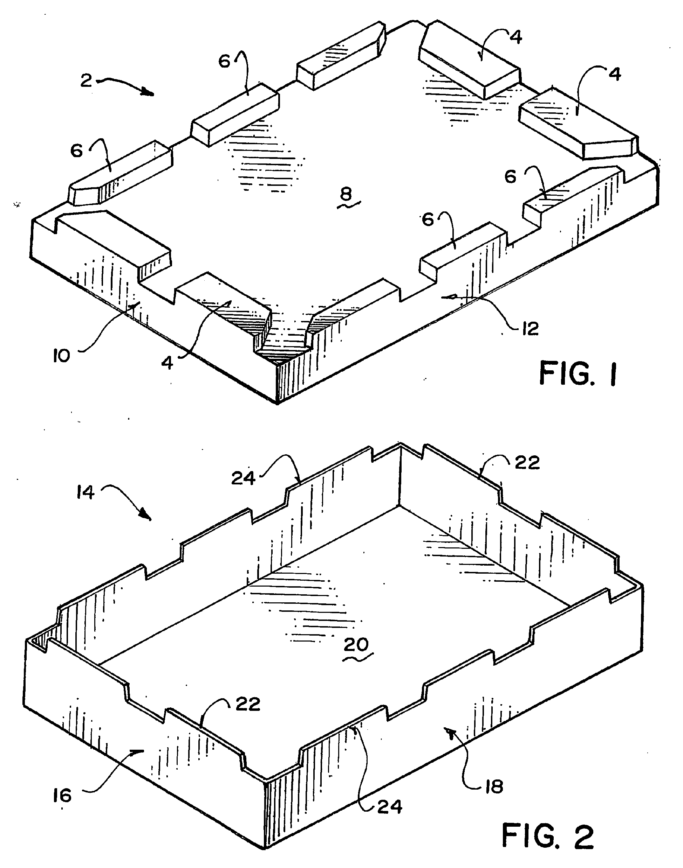

Specific embodiments of the invention will now be discussed in association with the drawings. Figure 1 illustrates an isometric view of a lid with a plurality of raised supports and in between grooves around the circumference of the lid for packaging fruit and vegetables, according to the invention. As seen in Figure 1, the lid 2 is constructed of molded polymer, preferably transparent, such as polyethylene or acrylic, and has two groups of two raised wedge-shaped end supports 4 at the ends and two groups of three raised side supports 6 at the sides. These raised supports 4 and 6 are distributed around the periphery of the lid 2 and define between them a plurality of in between grooves and a central valley or depression 8 on the top of the lid 2. The lid 2 also includes two downwardly extending end panels 10 and two downwardly extending side panels 12. These end and side panels 10 and 12 fit over the top exterior of the base 14, as seen in Figure 2. The lid 2 can be preformed by any number of conventional techniques but vacuum molding or drawing is particularly suitable. Normally, the lid 2 is constructed of a gas-impermeable transparent polymer but it can, if required, be constructed of a suitable gas permeable transparent or non-transparent polymer. In one version, the lid can be 40 cm in width and 60 cm in length to conform with Eurotray standards. The top surfaces of the end supports and side supports 4 and 6 can be roughened to enhance friction grip when trays are stacked one upon the other.

Figure 2 illustrates an isometric view of a corresponding tray base for the lid illustrated in Figure 1. In particular, Figure 2 illustrates a tray base with uneven top edges on the two sidewalls and the two end walls to conform with the interior contours of the end and side supports of the lid as shown in Figure 1. As seen in Figure 2, the one piece tray base 14 is constructed with two end panels 16 with upper edges 22 and two side panels 18 with upper edges 24, which respectively conform with the configurations of the interior of the two end supports 4 and the two side supports 6 of the lid 2 as shown in Figure 1. The tray base 14 may be formed of conventional multi-layer corrugated kraft paper or two or more layers of kraft paper, with gas permeable polymer film between, such as constructions of the type disclosed in US Patents Nos. 5,575,418, 5,609,293 and 6,050,412. The two end supports 16 and the two side supports 18 form between them a bottom panel 20. It is understood that the top edges of the tray base may be even in elevation. However, it is preferred that the top edges be uneven because this adds strength to the lid and tray base combination.

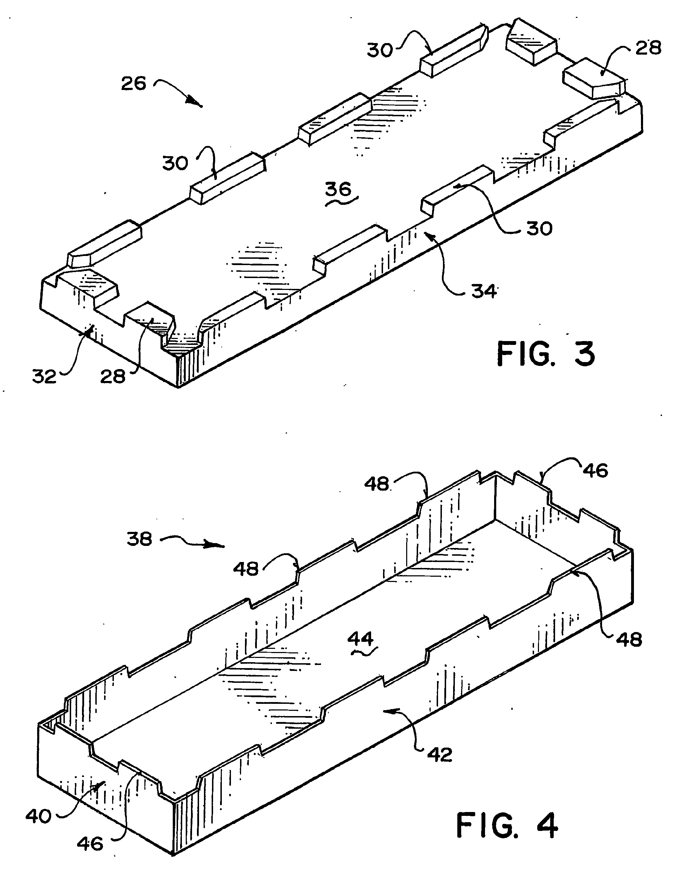

Figure 3 illustrates an isometric view of a lid with a plurality of raised supports around the circumference for packaging cut flowers according to a second embodiment of the invention. As seen in Figure 3, the lid 26 is constructed of molded polymer, preferably transparent, such as polyethylene or acrylic, and has a pair of wedge-shaped raised end supports 28 and two groups of four side supports 30 at each side. These end supports 28 and side supports 30 are raised and define between them a plurality of grooves and a central valley or depression 36 on the top of the lid 26. The lid 26 also includes two downwardly extending end panels 32 and two downwardly extending side panels 34. These end and side panels 32 and 34 fit over the exterior of the tray base 38 as seen in Figure 4.

Figure 4 illustrates a corresponding tray base for the lid illustrated in Figure 3. In particular, Figure 4 illustrates a tray base with uneven top edges on the two side walls and two end walls to conform with the interior contours of the lid as shown in Figure 3. As seen in Figure 4, the one piece base 38 is constructed with two end panels 40 with upper raised edges 46 and two side panels 42 with raised upper edges 48. The two end panels 40 and side panels 42 define between them a tray base 44. The elevations of the top edges of the two groups of end panels 46 and four groups of side edges 48 conform with the interior configurations of the end supports 28 and side supports 30 of the lid 26 as shown in Figure 3.

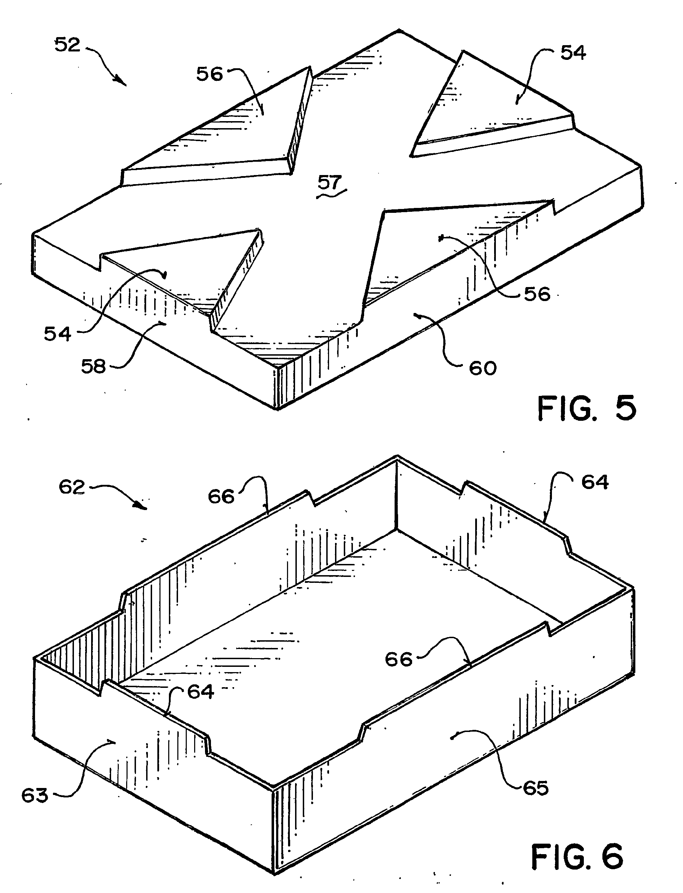

Figure 5 illustrates an isometric view of a transparent "X"-grooved lid, according to a further embodiment of the invention. As seen in Figure 5, the lid 52 is constructed of molded polymer, preferably transparent, such as polyethylene or acrylic, and has two broad area triangular raised end supports 54 and two broad area triangular raised side supports 56. These supports 54 and 56 define between them an "X" shaped valley or depression 57 on the top surface of the lid 52. The lid 52 also includes two downwardly extending end panels 58 and two downwardly extending side panels 60. These end and side panels 58 and 60 fit over the tray base 62, as seen in Figure 2. The lid 52 can be formed by any number of conventional techniques, but vacuum molding or drawing is particularly suitable. In one version, the lid 52 can be 40 cm in width and 60 cm in length to conform with Eurotray standards.

Figure 6 illustrates an isometric view of a tray base with uneven top edges on the two side walls and two end walls to conform with the interior contours of the lid 52 as shown in Figure 5. Specifically, as seen in Figure 6, the one-piece tray base 62 is constructed with two end panels 63 with upper edges 64 of two elevations and two side panels 65 with upper edges 66 of two elevations which respectively conform with the interiors of the two end supports 54 and the two side supports 56 of the lid 52 as shown in Figure 5. The base 62 may be formed of conventional multi-layer corrugated kraft paper or two or more layers of kraft paper with a gas permeable polymer film between, such as constructions of the type disclosed in U.S. Patents Nos. 5,575,418; 5,609,293; and 6,050,412. It will be understood that while uneven top edges of the base are shown, the invention includes bases with straight upper edges. Uneven upper edges which conform with the profile of the lid are preferred because this provides greater strength to the lid and base combination for stacking purposes.

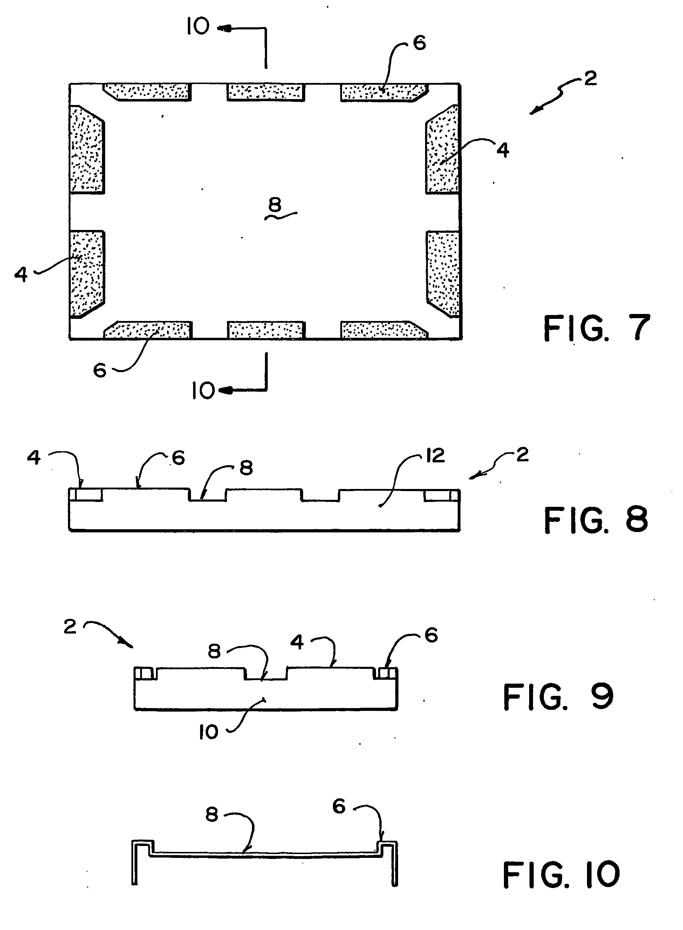

Figure 7 illustrates a plan view of the lid illustrated in Figure 1. As seen in Figure 7, the lid 8 has a pair of end supports 4 at each end, and a trio of side supports 6 at each side. These raised supports have grooves between them to enable cooling air to be circulated over the lids. The top surfaces of the end and side supports 4 are roughened to enhance grippability and discourage shifting when the trays are stacked.

Figure 8 illustrates a side elevation view of the lid of Figure 7. Figure 8 illustrates the raised end supports 4, raised side supports 6 and side panel 12.

Figure 9 illustrates an end view of the lid of Figure 7. Figure 9 illustrates the end panel 10, raised end supports 4 and raised side supports 6.

Figure 10 illustrates a section view taken along section 10-10 of Figure 7 and in particular, illustrates the central depressed area 8 and the pair of raised side supports 6.

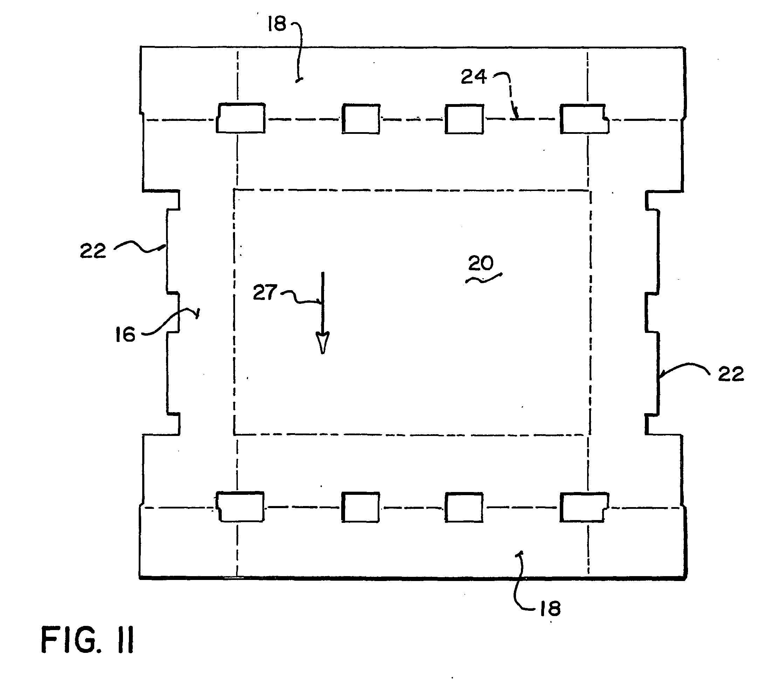

Figure 11 illustrates a plan view of a blank for a tray base, as seen in Figure 2. In particular, Figure 11 illustrates a paperboard blank with a pair of side panels 18 and a pair of end panels 16. When folded along the stippled lines, the erected paperboard blank forms a tray base 14 with base 20 as illustrated in Figure 2. The blank is typically formed of corrugated paperboard. The arrow 27 shown in Figure 11 indicates the direction of the corrugated flutes that are in the interior of the paperboard blank. The arrow 27 denotes the direction of the corrugated flutes of the paperboard from which the tray is formed. The flutes extend laterally rather than longitudinally. This flute orientation provides strength to the base. If the flutes extend longitudinally, the base 14 is prone to bending in a longitudinal direction.

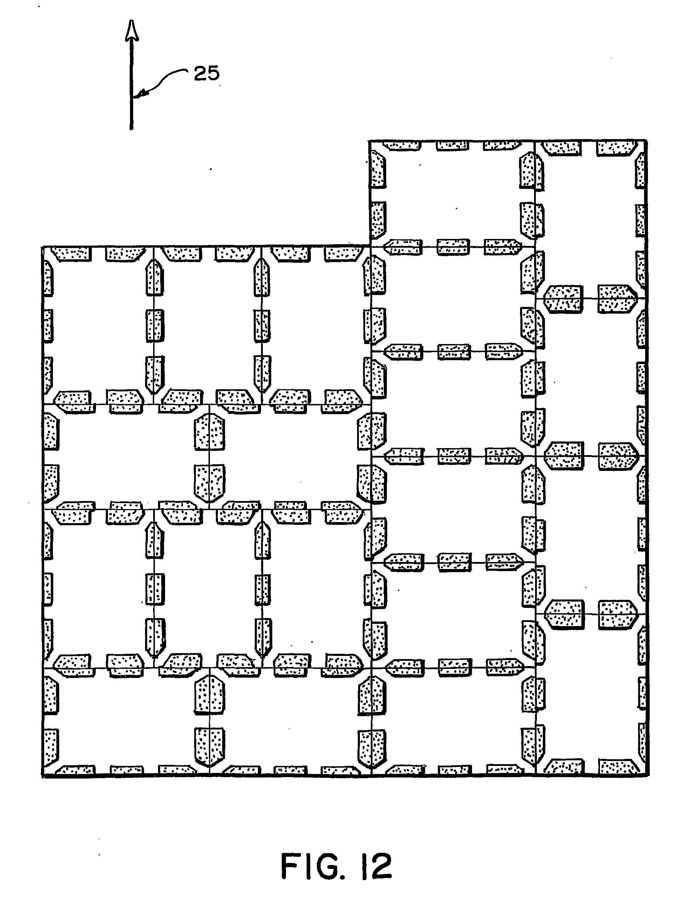

Figure 12 illustrates a plan view of a standard ISO container with a grouping of pallets loaded with stacked lid and tray base containers according to the embodiment illustrated in Figures 1, 2 and 7 to 11 of the invention. The arrow 25 denotes the typical direction of air flow in the container.

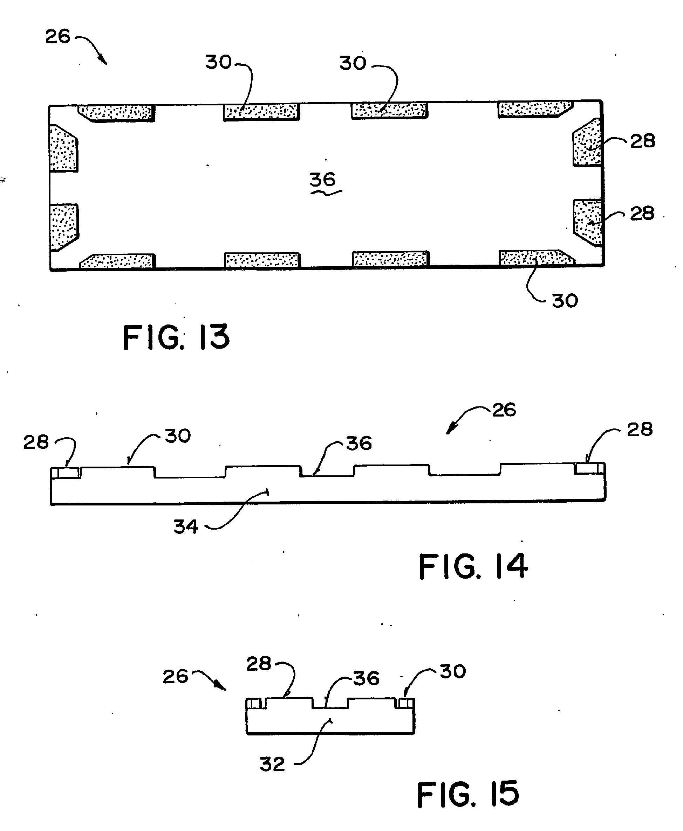

Figure 13 illustrates a plan view of the lid illustrated in Figure 3. Specifically, Figure 13 illustrates a plan view of a lid 36 used for shipping cut flowers according to the invention. The lid, as seen in Figure 13, has a pair of raised wedge-shaped end supports 28 at each end and two groups of four raised side supports 30 on each side of the lid 36. The top surfaces of the end supports 28 and side supports 30 are roughened to enhance grippability so that when trays with lids are stacked, shifting is discouraged.

Figure 14 illustrates a side elevation view of the lid of Figure 13, including side panel 34 and raised end supports 28 and raised side supports 30. The grooves between the supports 30 are clearly shown.

Figure 15 illustrates an end view of the lid of Figure 13, including raised end supports 28, raised side supports 30 and end panel 32.

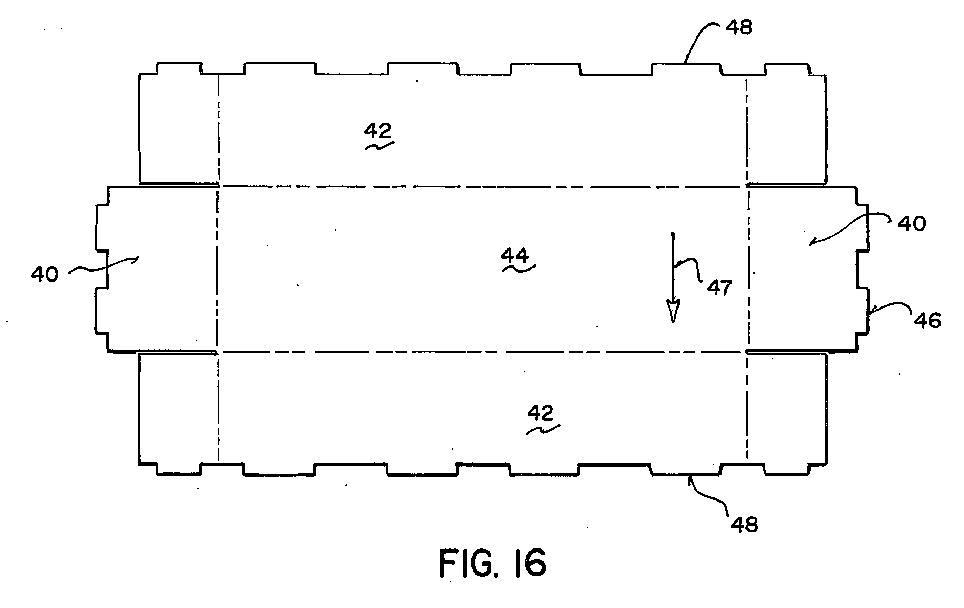

Figure 16 illustrates a plan view of a blank for a tray base, as illustrated in Figure 4. Specifically, Figure 16 illustrates a paperboard blank, suitable for packaging and shipping cut flowers, including tray bottom 44, a pair of end panels 40 and a pair of side panels 42. Raised end edges 46 and raised side edges 48 are also shown. The arrow 47 indicates the direction of the corrugated flutes in the paperboard that is used to make the blank illustrated in Figure 16. The stippled lines indicate crease lines and when the blank is folded along the crease lines, the erected blank forms a tray base as illustrated in Figure 4. The arrow 47 denotes that the direction of the corrugated flutes of the paperboard from which the tray is formed. The flutes extend laterally rather than longitudinally. This flute orientation provides strength to the base. If the flutes extend longitudinally, the base 38 is prone to bending in a longitudinal direction.

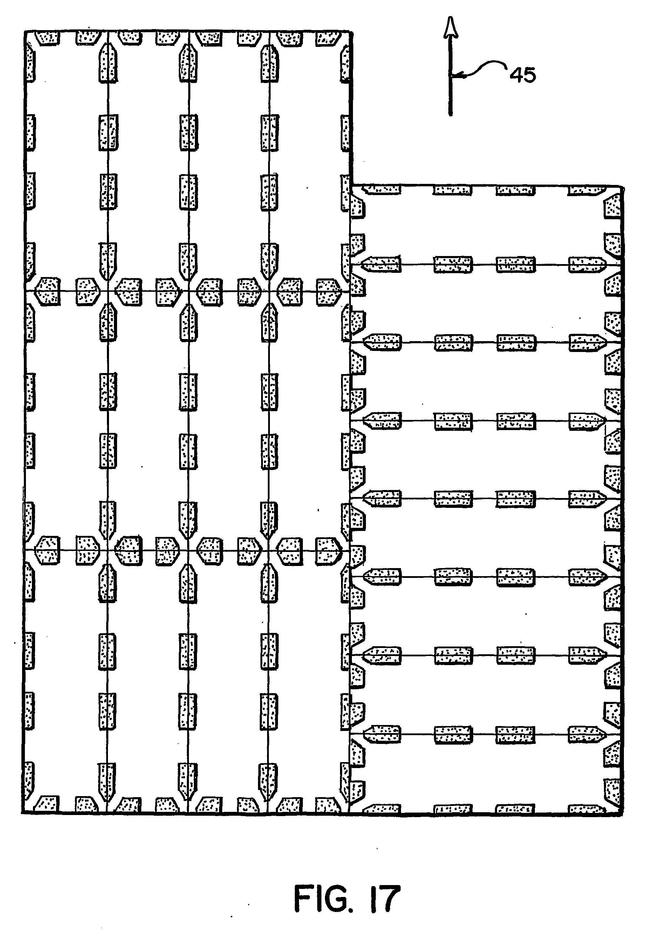

Figure 17 illustrates a plan view of a standard ISO container with a grouping of pallets loaded with stacked lid and tray base containers according to the embodiment illustrated in Figures 3, 4 and 13 to 16 of the invention. The arrow 45 indicates the typical direction of air flow in the container in which the palettes of trays are stored.

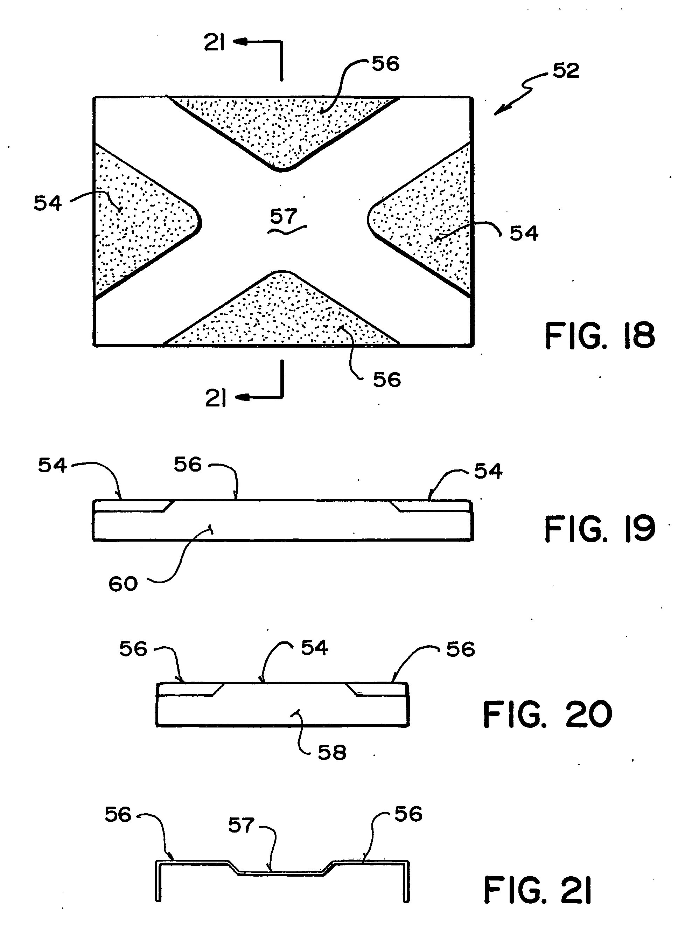

Figure 18 illustrates a plan view of an "X" diagonal-grooved lid 52 of Figure 5 with two raised broad area triangular end supports 54 and two raised broad area triangular side supports 56, which together form an "X" shaped channel, valley or depression 57 in the top of the lid 52. The lid 52 can be fitted over the top of the modified base 62 of Figure 6 to provide a strong modified atmosphere package for shipping and stacking of fresh fruits, vegetables and cut flowers. The shaped channel between the two end supports 54 and side supports 56 enables air to be circulated between stacked Eurotrays. The broad areas of the four triangular shaped supports 54 and 56 provide broad load bearing sites so a reasonable number of trays can be stacked upon one another without distorting or crushing the bottom tray in the stack. The broad areas of the supports 54 and 56 also provide tolerance so that trays will still support one another, even though they may not be stacked in close alignment. The top surfaces of the supports 54 and 56 can be roughened to enhance grippability. The top surfaces of the supports 54 and 56 can have grooves therein to enhance air circulation over the top of the lids.

Figure 19 illustrates a side elevation view of the Eurotray lid 52, with raised side support 56 and raised end supports 54, and side 60.

Figure 20 illustrates an end view of the lid 52 with raised end support 54, raised side supports 56, and end panel 58.

Figure 21 illustrates a section view taken along lines 21-21 of Figure 18, showing the two side supports 56 and the central groove 57.

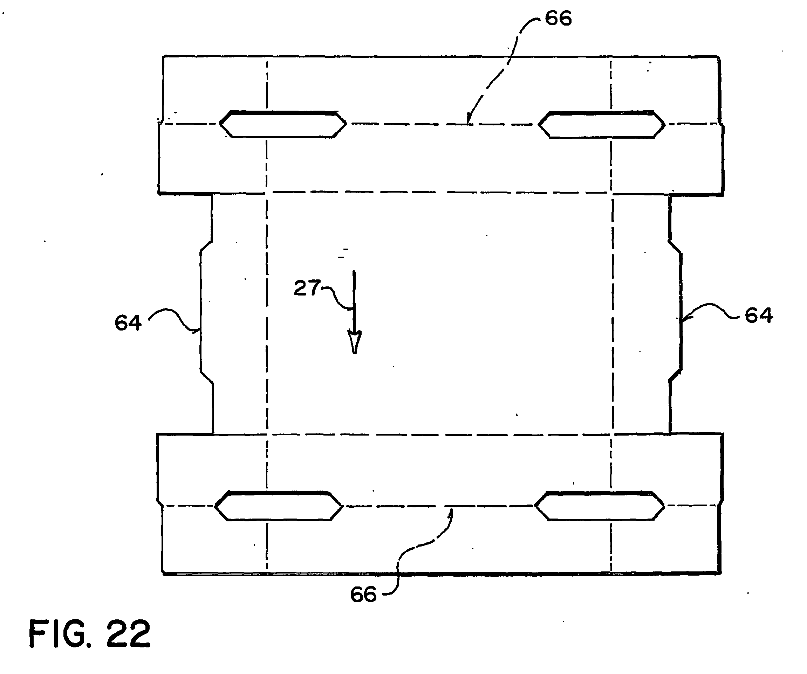

Figure 22 illustrates a plan view of a corrugated paperboard blank for forming the tray base 62 illustrated in Figure 6. The blank can include an intermediate layer of gas permeable film (not visible). The blank can be folded and erected to form a base 62 as shown in Figure 6. The upper edges of the end panels 64 and the side panels 66 are visible. The arrow 27 denotes that the direction of the corrugated flutes of the paperboard from which the tray is formed. The flutes extend laterally rather than longitudinally. This flute orientation provides strength to the base. If the flutes extend longitudinally, the base 62 is prone to bending in a longitudinal direction.

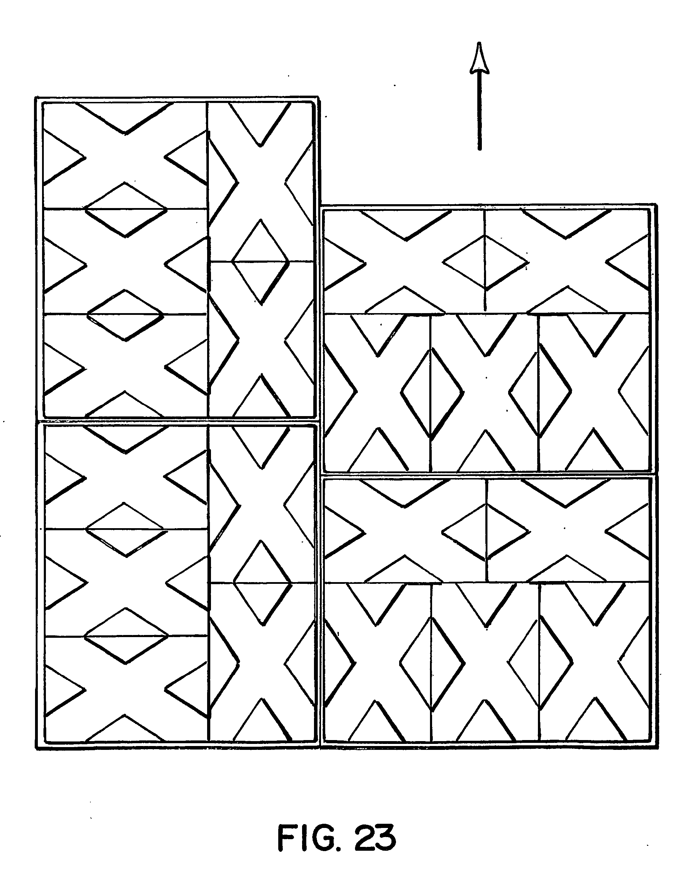

Figure 23 illustrates a plan view of a standard ISO container with a close grouping of pallets loaded with stacked containers according to a further embodiment of the invention. As seen in Figure 23, each pallet, as indicated by the bold lines, bears three "X" Eurotray packages arranged in side by side relation and two "X" Eurotray packages arranged in end to end relation. The "X" shaped channels or grooves in the tops of the lids enable cooling air to be circulated through the stacked lid and base packages. Also, the triangular shape of the two end and two side supports provide large load bearing areas for stacked trays and minimize crushing.

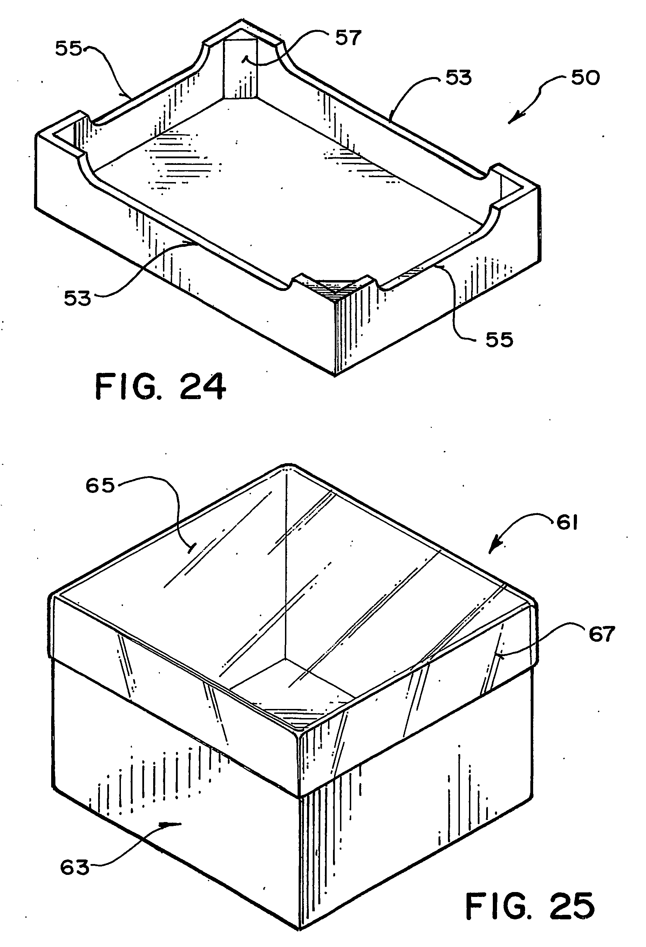

Figure 24 illustrates an isometric view of a modified Eurobox with recessed sides and ends. As seen in Figure 24, the modified Eurotray 50 is sized to standardized shipping container specifications, namely 40 cm x 60 cm, and has downwardly recessed sides 53 and downwardly recessed ends 55. In the embodiment shown in Figure 24, the tray 50 also has reinforced corners 57, which enable the trays to be stacked. The recessed sides 53 and ends 55 enable refrigerated air to be circulated through both the sides and ends of stacked Eurotrays 50. The depth of the tray 50 can be increased two or more times to enable multiple layers of the boxes to be packed. A tray as shown in Figure 24 is disclosed in U.S. patent application Serial No. 11/458,951, filed 20 July 2006.

Figure 25 illustrates an isometric view of a MAP box embodiment of the invention. The MAP box 61 has a corrugated paperboard base 63 and a transparent lid 65, with downwardly extending sides 67 which fit snugly over the top and partially down the sides of the base 63. The transparent lid 65 enables the contents of the MAP box 61 to be viewed without opening the box 61. The sides 67 can be taped to the base 63 to provide a seal for the MA environment inside the box 61.

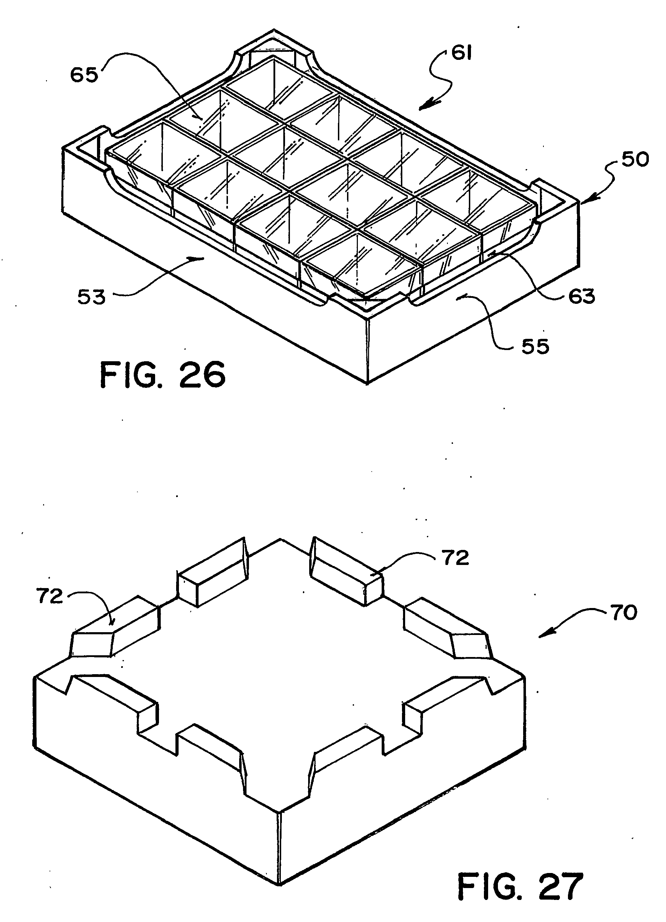

Figure 26 illustrates an isometric view of a modified Eurobox holding a plurality of MAP packages. As seen in Figure 26, the modified Eurotray 50, with reinforced corners and recessed sides 53 and ends 55, is filled with rows of MA boxes 61. The MA boxes 61 are loaded with fresh fruit, vegetables or flowers, as the case may be. It will be recognized that while three rows of four, totaling twelve MA containers 61, are shown in Figure 26, the sizes of the containers can be varied so that larger MA containers can fill the modified Eurotray 50, such as six or eight MA packages to a Eurotray. Also, it will be understood that the depth of the trays 50 can be increased to hold two or more layers of boxes 61.

Figure 27 illustrates an isometric view of an alternative embodiment of a MAP box with a plurality of raised supports around the circumference of the lid. As seen in Figure 27, the MAP box lid 70 has a plurality of raised supports 72 around its periphery. These supports 72 allow the MAP boxes to be stacked and permit air to be circulated through the grooves between the lids.

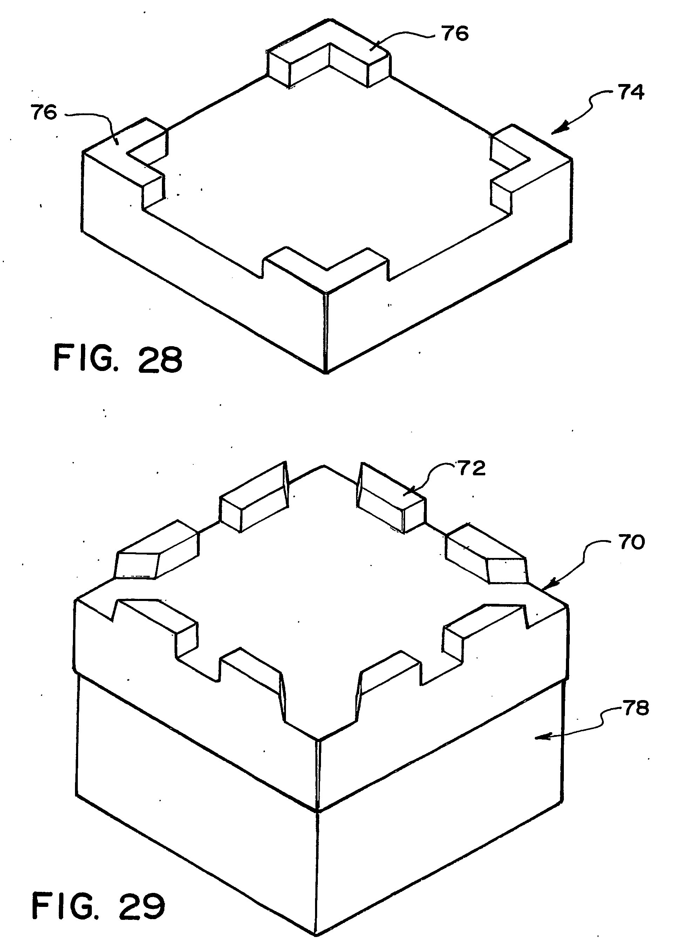

Figure 28 illustrates an isometric view of a further alternative embodiment of a MAP box with raised supports at the corners. As seen in Figure 28, the alternative design of MAP lid 74 has raised supports 76 located at the four corners. These supports 76 allow the MAP boxes to be stacked and permit air to be circulated through the grooves between the lids.

Figure 29 illustrates an isometric view of a further alternative embodiment of a MAP box with raised supports mounted on a MAP box base. As seen in Figure 29, a MAP lid 70 as illustrated in Figure 27 is mounted on a MAP box base 78. The raised supports 72 allow the MAP boxes to be stacked and permit air to be circulated through the grooves between the lids.

The modified lid and tray base are preferably sized to standardized shipping container specifications (ISO specifications), namely 40 cm width x 60 cm length. The grooves in lid 2 of Figure 1, lid 26 of Figure 3, and the "X" configured diagonal-grooves in lid 52 of Figure 5 enable refrigerated air to be circulated through both the sides and ends of the lid and base combinations when they are stacked, and maintain modified atmosphere packaged produce in optimum condition.

Storage life of fresh fruits and vegetables is dependent on storage temperature, gas composition around the produce and degree of physical abuse leading to bruises, abrasions and cuts. Storage and transportation of fruits and vegetables is facilitated by the packing of the produce in suitable package systems which provide features such as prolonging storage life, reducing physical abuse and lowering the rate of water loss of produce.

Corrugated paperboard boxes and cartons are used commercially for the storage and transportation of fresh fruits and vegetables for the following reasons:
1. Relatively low cost per unit volume;
2. Low thermal conductivity;
3. Impact absorbing ability to prevent produce bruising;
4. Ease of disposal at the receiving end; and
5. Moderate stacking strength.

Corrugated paperboard has very high O₂ and CO₂ permeabilities, so this material by itself is generally unsuitable for the construction of MA package systems. However, in the MAP lid and base package according to the invention, the base can be formed of a paperboard construction with an intermediate gas permeable film as disclosed in US Patents Nos. 5,574,418 and 5,609,293. By utilizing a gas-permeable polymer in the paperboard construction, the lid can be customized to provide a gas barrier or specific gas and moisture permeabilities.

In some cases, it may be advisable to have the lid formed of a gas permeable polymer. The gas permeable polymeric lid can be formed from homopolymers or copolymers produced as a monolayer or coextruded layers with specific formulation and caliper selected to produce the required oxygen (O₂) and carbon dioxide (CO₂) permeabilities. The polymers are usually selected from the polyolefin family, typically Low Density Polyethylene (LDPE), linear low density polyethylene (LLDPE), medium and high density polyethylene (MDPE and HDPE), polypropylene (PP). However, other polymers such as ethylenevinylacetate (EVA), ethyl butyl acetate (EBA), ionomer resins (cross-linked), cast polyester (PET), nylon (polyamide) and polycarbonate (PC) may also be considered.

A further unique embodiment of this invention is the ability of the base and lid to maintain internal equilibrium under varying gas compositions in the headspace. The gas permeability of the base and lid prevents a vacuum condition developing which can occur in conventional MAP systems if the packaged produce begins to absorb carbon dioxide. If such conditions were to develop in the permeable base and lid, the controlled influx of gases through the gas permeable polymer film in the base will not allow a deleterious vacuum to develop in the interior headspace of the lid and base.

For specific product applications, the rate of gas exchange within the base and lid combination may be achieved by controlled film porosity of the gas permeable intermediate polymer film layer. Porosity may also be achieved by piercing predetermined holes through the polymer containing inner liner either at the corrugating stage, die cutting operation, box forming stage, or in the completed box. Hole size, either single or multiple, may vary depending on the required gas exchange rate but typical hole diameters would be in the range of 0.25 to 2.00 mm. Hole positions on the base or lid will vary depending on the optimum location for each packaged product and the gas flow dynamics within the base and lid combination. Once the produce is packaged in the base and lid combination, the lid, if desired, can be sealed to the base by tape or some other sealing mechanism.

The oxygen (O₂) and carbon dioxide (CO₂) gas exchange rates through the lid and base of the invention should preferably be within the range 50-100,000 cc³/m² 24 hr. 1 atm.

It has also been found that the following additional factors must be critically controlled if consistent polymer characteristics are to be achieved:

| | |
|---|---|
| Process conditions: | Extrusion rate, melt temperature, melt pressure, nip pressure, nip position, chill roll temperature, corrugating process conditions, board die cutting conditions. |
| Polymer characteristics: | Melt flow index, additives (processing aids). |
| Paper characteristics: | Fibre length, virgin or recycled pulp, smooth or rough side, with or without calender process. |

The base, preferably of Eurotray dimensions, may be constructed of multiple layers of kraft paper, or of a plastic film membrane sandwiched between two sheets of kraft paper to form a tri-layer complex. The film membrane may be a gas-permeable plastic film or a plastic coating applied to one of the sheets of kraft paper, and then sealed between the two adjoining sheets. The membrane can be bonded to both of the kraft paper sheets when the plastic is in semi-molten state and the two paper sheets are pressed together.

When 25 g/m² low density polyethylene was used, and extrusion laminated on 40 g/m² and 125 g/m² MG kraft, the O₂ and CO₂ permeabilities were 1300 and 2200 cc/m² 24 hr. 1 atm. respectively. When a 35 g/m² coating of 17 % EBA and LDPE was extrusion laminated, the O₂ and CO₂ permeabilities were 2300 and 4700 cc/m² 24 hr. 1 atm. respectively.

Studies have been carried out on fruits and vegetables packaged in sealed polymeric, plastic film bags in a corrugated paperboard box (Prince, 1989). However, several disadvantages of using a bag-in-a box are evident:
1. Loss of headspace around produce with the shrinkage of the bag under negative pressure created by respiratory CO₂ dissolution in the produce tissue;
2. Extra handling of two packages, namely, the bag and the box;
3. The thickness of the bag film must be at least 6 mil to ensure bag durability during the handling, and thus high package cost and low gas permeability of the bag is unavoidable.
4. Thin plastic film serves as a cold surface for condensation of water emitted from the produce, and can result in weight loss of produce.

A benefit of injecting gas into an hermetically sealed MA box is that it is possible to include a trace gas, typically helium or sulphur hexafluoride as a leak detection method. Provided the MA box is relying on gas permeability and not porosity, it is possible to sense gas escape through cracks, unwanted pinholes or faulty glue seals.

Upon the insertion of a gas nozzle into the inlet aperture and upon the flow of the pressurized gas mixture through the headspace of the package system, plugs with vent pinholes or styrofoam plugs can be used for produce with high respiration rates and gas-impermeable plastic plugs may be used for low respiration rate produce.

While a number of exemplary aspects and embodiments have been discussed above, those of skill in the art will recognize certain modifications, permutations, additions and sub-combinations thereof. It is therefore intended that the following appended claims and claims hereafter introduced are interpreted to include all such modifications, permutations, additions and sub-combinations as are within their true scope.

## Claims

1. A gas-permeable modified atmosphere package combination (2,14; 26,38; 52,62; 70,78) comprising:
(a) a lid (2; 26; 52; 70) constructed of a polymer, the lid having on the top surface thereof at the mid-regions of each side (12; 34; 60) and each end (10; 32; 63) a plurality of raised load supports (4,6; 28,30; 54,56; 72) and in between grooves; and
(b) a base (14; 38; 62; 78) with a hollow interior constructed of corrugated kraft paper polymer and having a configuration at the top edges which conforms with the interior profile of the lid; the grooves enabling air to be circulated over the lid when one package combination is stacked on another.

2. A combination as claimed in claim 1 wherein the top surface of the lid has around its periphery at least one raised load support (4, 28; 54) in the mid-region of each end and at least one raised load support (6; 30; 56) in the mid-region of each side, and a depressed area (8; 36; 57) between the raised end and side load supports.

3. A combination as claimed in claim 1 wherein the top surface of the lid has around its periphery at least two raised load supports (4; 28) in the mid-region of each end (10; 32) and at least three raised side supports (6; 30) in the mid-region of each of the two sides (12; 34) of the lid, and a depressed area (8; 36) between the raised end and side load supports.

4. A combination as claimed in claim 1 wherein the top surface of the lid has around its periphery at least two raised load supports (28) in the mid-region of each end (32) and at least four raised side supports (30) in the mid-region of each of the two sides (34) of the lid, and a depressed area (36) between the raised end and side load supports.

5. A lid (2; 26; 52; 70) for a gas-permeable modified atmosphere package comprising a top surface which includes a plurality of raised load supports (4,6; 28,30; 54,56; 72) and in between grooves arranged around its periphery, the grooves enabling air to be circulated over the lid when one package is stacked on another, wherein each end (10; 32; 63) of the lid has in the mid-region thereof at least one raised load support and each side (12; 34; 60) of the lid has in the mid-region thereof at least one raised load support and a depressed area (8; 36; 57) exists between the raised end and side load supports.

6. A lid as claimed in claim 5 wherein each end (10; 32) of the lid has in the mid-region thereof at least two raised load supports (4; 28) and each side (12; 34) of the lid has in the mid-region thereof at least three raised side supports (6; 30).

7. A lid as claimed in claim 5 wherein each end of the lid has in the mid-region thereof at least three raised load supports and each side of the lid has in the mid-region thereof at least four raised side supports.

8. A lid as claimed in anyone of claims from 5 to 7, wherein the grooves at the sides of the lid are disposed laterally while the grooves at the ends of the lid are disposed longitudinally.

9. A lid as claimed in anyone of claim from 5 to 8, wherein the top surface of the lid has diagonally disposed grooves at each of the four corners of the lid.

10. A lid (52) as claimed in claim 5 wherein the grooves of the surface of the lid have an "X" type pattern.

11. A lid as claimed in anyone of claims from 5 to 10, wherein the lid is rectangular and 60 cm in length and 40 cm in width.

12. A lid as claimed in anyone of claims from 5 to 11, wherein the lid is formed of transparent polymer.

13. A lid as claimed in claim 5 wherein the lid has a planar top surface and is formed of a transparent material.

14. A lid as claimed in claim 13 wherein the top surface of the lid is square or rectangular and the transparent material is a transparent polymer.

15. A lid as claimed in anyone of claims from 5 to 14, wherein the lid is deployed on a hollow base (14; 38; 62; 78) constructed of paperboard.

## Patentansprüche

1. Gasdurchlässige Verpackungskombination (2, 14; 26, 38; 52, 62; 70, 78) mit modifizierter Atmosphäre, umfassend:
(a) einen aus einem Polymer hergestellten Deckel (2; 26; 52; 70), wobei der Deckel auf der oberen Fläche in dem Mittenbereich jeder Seite (12; 34; 60) und jedes Endes (10; 32; 63) mehrere erhöhte Laststützen (4, 6; 28, 30; 54, 56; 72) und dazwischen Nuten hat, und
(b) eine Basis (14; 38, 62; 78) mit einem hohlen Inneren, die aus Wellkraftpapierpolymer hergestellt ist und an den oberen Kanten eine Konfiguration hat, die dem inneren Profil des Deckels entspricht, wobei die Nuten die Zirkulation von Luft über den Deckel erlauben, wenn eine Verpackungskombination auf einer anderen gestapelt wird.

2. Kombinationen nach Anspruch 1, wobei die obere Fläche des Deckels entlang ihres Umfangs mindestens eine erhöhte Laststütze (4, 28; 54) in dem Mittenbereich jedes Endes und mindestens eine erhöhte Laststütze (6; 30; 56) in dem Mittenbereich jeder Seite und einen vertieften Bereich (8; 36; 57) zwischen den erhöhten Endlaststützen und seitlichen Laststützen hat.

3. Kombination nach Anspruch 1, wobei die obere Fläche des Deckels entlang ihres Umfangs mindestens zwei erhöhte Laststützen (4; 28) in dem Mittenbereich jedes Endes (10; 32) und mindestens drei erhöhte seitliche Stützen (6; 30) in dem Mittenbereich jeder der zwei Seiten (12; 34) des Deckels und einen vertieften Bereich (8; 36) zwischen den erhöhten Endlaststützen und seitlichen Laststützen hat.

4. Kombination nach Anspruch 1, wobei die obere Fläche des Deckels entlang ihres Umfangs mindestens zwei erhöhte Laststützen (28) in dem Mittenbereich jedes Endes (32) und mindestens vier erhöhte Seitenstützen (30) in dem Mittenbereich jeder der zwei Seiten (34) des Deckels und einen vertieften Bereich (36) zwischen den erhöhten Endlaststützen und seitlichen Laststützen hat.

5. Deckel (2; 26; 52; 70) für eine gasdurchlässige Verpackung mit modifizierter Atmosphäre, der eine obere Fläche aufweist, die mehrere erhöhte Laststützen (4, 6; 28, 30; 54, 56; 72) und dazwischen Nuten um ihren Umfang eingerichtet hat, wobei die Nuten die Zirkulation von Luft über den Deckel erlauben, wenn eine Verpackung auf einer anderen Verpackung gestapelt wird, wobei jedes Ende (10; 13; 63) des Deckels in seinem Mittenbereich mindestens eine erhöhte Laststütze hat und jede Seite (12; 34; 60) des Deckels in ihrem Mittenbereich mindestens eine erhöhte Laststütze hat und ein vertiefter Bereich (8; 36; 57) zwischen der erhöhten Endlaststütze und den seitlichen Laststützen existiert.

6. Deckel nach Anspruch 5, wobei jedes Ende (10; 32) des Deckels in seinem Mittenbereich mindestens zwei erhöhte Laststützen (4; 28) hat und wobei jede Seite (12; 34) des Deckels in ihrem Mittenbereich mindestens drei erhöhte Seitenstützen (6; 30) hat.

7. Deckel nach Anspruch 5, wobei jedes Ende des Deckels in seinem Mittenbereich mindestens drei erhöhte Laststützen hat und jede Seite des Deckels in ihrem Mittenbereich mindestens vier erhöhte Seitenstützen hat.

8. Deckel nach einem der Ansprüche 5 bis 7, wobei die Nuten an den Seiten des Deckels seitlich angeordnet sind, während die Nuten an den Enden des Deckels längs angeordnet sind.

9. Deckel nach einem der Ansprüche die 5 bis 8, wobei die obere Fläche des Deckels diagonal angeordnete Nuten an jeder der vier Ecken des Deckels aufweist.

10. Deckel (52) nach Anspruch 5, wobei die Nuten der Oberfläche des Deckels ein Muster des Typs "X" haben.

11. Deckel nach einem der Ansprüche 5 bis 10, wobei der Deckel rechteckig und 60 cm lang und 40 cm breit ist.

12. Deckel nach einem der Ansprüche 5 bis 11, wobei der Deckel aus durchsichtigem Polymer hergestellt ist.

13. Deckel nach Anspruch 5, wobei der Deckel eine ebene obere Fläche hat und aus einem durchsichtigen Material ausgebildet ist.

14. Deckel nach Anspruch 13, wobei die obere Fläche des Deckels quadratisch oder rechteckig ist und das durchsichtige Material ein durchsichtiges Polymer ist.

15. Deckel nach einem der Ansprüche 5 bis 14, wobei der Deckel auf einer hohlen Basis (14; 38; 62; 78), die aus Pappe hergestellt ist, angeordnet ist.

## Revendications

1. Combinaison de conditionnement sous atmosphère modifiée, perméable au gaz (2, 14; 26, 38; 52, 62; 70, 78), comprenant:
(a) un couvercle (2 ; 26 ; 52 ; 70) réalisé dans un polymère, ledit couvercle présentant sur la surface supérieure, dans la zone médiane de chaque côté (12 ; 34 ; 60) et de chaque extrémité (10 ; 32 ; 63), une pluralité de supports de charge surélevés (4, 6 ; 28, 30 ; 54, 56 ; 72) et des rainures situées entre ceux-ci, et
(b) une base (14 ; 38 ; 62 ; 78) ayant un intérieur creux, qui est réalisée en polymère de papier kraft ondulé et qui présente, sur les arêtes supérieures, une configuration qui correspond au profil intérieur dudit couvercle, lesdites rainures permettant la circulation d'air sur le couvercle lorsqu'une combinaison de conditionnement est empilée sur une autre.

2. Combinaison selon la revendication 1, dans laquelle la surface supérieure du couvercle présente, le long de sa circonférence, au moins un support surélevé de charge (4 ; 28 ; 54) dans la zone médiane de chaque extrémité et au moins un support surélevé de charge (6 ; 30 ; 56) dans la zone médiane de chaque côté ainsi qu'une zone en creux (8 ; 36 ; 57) entre lesdits supports de charge surélevés d'extrémité et de côté.

3. Combinaison selon la revendication 1, dans laquelle la surface supérieure du couvercle présente, le long de sa circonférence, au moins deux supports de charge surélevés (4 ; 28) dans la zone médiane de chaque extrémité (10 ; 32) et au moins trois supports de côté surélevés (6 ; 30) dans la zone médiane de chacun des deux côtés (12 ; 34) du couvercle ainsi qu'une zone en creux (8 ; 36) entre lesdits supports de charge surélevés d'extrémité et de côté.

4. Combinaison selon la revendication 1, dans laquelle la surface supérieure du couvercle présente, le long de sa circonférence, au moins deux supports de charge surélevés (28) dans la zone médiane de chaque extrémité (32) et au moins quatre supports de côté surélevés (30) dans la zone médiane de chacun des deux côtés (34) du couvercle ainsi qu'une zone en creux (36) entre lesdits supports de charge surélevés d'extrémité et de côté.

5. Couvercle (2 ; 26 ; 52 ; 70) pour un emballage perméable au gaz et à atmosphère modifiée, comprenant une surface supérieure qui intègre, le long de sa circonférence, une pluralité de supports de charge surélevés (4, 6 ; 28, 30 ; 54, 56 ; 72) et des rainures situées entre ceux-ci, lesdites rainures permettant la circulation d'air sur ledit couvercle lorsqu'un emballage est empilé sur un autre, chaque extrémité (10 ; 13 ; 63) du couvercle présentant, dans sa zone médiane, au moins un support surélevé de charge et chaque côté (12 ; 34 ; 60) du couvercle présentant, dans sa zone médiane, au moins un support surélevé de charge et une zone en creux (8 ; 36; 57) étant située entre lesdits supports de charge surélevés d'extrémité et de côté.

6. Couvercle selon la revendication 5, dans lequel chaque extrémité (10 ; 32) du couvercle présente, dans sa zone médiane, au moins deux supports de charge surélevés (4 ; 28) et chaque côté (12 ; 34) du couvercle présente, dans sa zone médiane, au moins trois supports de côté surélevés (6 ; 30).

7. Couvercle selon la revendication 5, dans lequel chaque extrémité du couvercle présente, dans sa zone médiane, au moins trois supports de charge surélevés et chaque côté du couvercle présente, dans sa zone médiane, au moins quatre supports de côté surélevés.

8. Couvercle selon l'une quelconque des revendications 5 à 7, dans lequel lesdites rainures prévues sur les côtés du couvercle sont disposées latéralement, tandis que les rainures prévues aux extrémités du couvercle sont disposées longitudinalement.

9. Couvercle selon l'une quelconque des revendications 5 à 8, dans lequel la surface supérieure du couvercle comprend des rainures disposées diagonalement, sur chacun des quatre coins du couvercle.

10. Couvercle (52) selon la revendication 5, dans lequel lesdites rainures de la surface du couvercle présentent un motif de type « X ».

11. Couvercle selon l'une quelconque des revendications 5 à 10, dans lequel le couvercle est rectangulaire et présente une longueur de 60 cm et une largeur de 40 cm.

12. Couvercle selon l'une quelconque des revendications 5 à 11, dans lequel ledit couvercle est réalisé en polymère transparent.

13. Couvercle selon la revendication 5, dans lequel ledit couvercle présente une surface supérieure plane et est réalisé dans une matière transparente.

14. Couvercle selon la revendication 13, dans lequel la surface supérieure du couvercle est carrée ou rectangulaire et la matière transparente est un polymère transparent.

15. Couvercle selon l'une quelconque des revendications 5 à 14, dans lequel ledit couvercle est disposé sur une base creuse (14 ; 38 ; 62, 78) qui est réalisée en carton.
